Europäisches Patentamt

European Patent Office

Office européen des brevets

(19)

(11) **EP 0 870 205 B1**

(12) **FASCICULE DE BREVET EUROPEEN**

(45) Date de publication et mention
de la délivrance du brevet:
**24.11.1999 Bulletin 1999/47**

(21) Numéro de dépôt: **96943167.5**

(22) Date de dépôt: **20.12.1996**

(51) Int Cl.$^6$: **G01S 13/56**, G01S 7/41

(86) Numéro de dépôt international:
**PCT/FR96/02051**

(87) Numéro de publication internationale:
**WO 97/23786 (03.07.1997 Gazette 1997/29)**

(54) **PROCEDE ET SYSTEME POUR LA DETECTION ET LOCALISATION D'UN INDIVIDU, PAR EXEMPLE ENSEVELI SOUS UN DEPOT D'AVALANCHE**

VERFAHREN UND SYSTEM ZUM ORTEN UND AUFSPÜREN VON VERSCHÜTTETEN IN LAWINEN

METHOD AND SYSTEM FOR SENSING AND LOCATING A PERSON, E.G. UNDER AN AVALANCHE

(84) Etats contractants désignés:
**AT CH DE ES FR GB IT LI SE**

(30) Priorité: **22.12.1995 FR 9515360**

(43) Date de publication de la demande:
**14.10.1998 Bulletin 1998/42**

(73) Titulaire: **OFFICE NATIONAL D'ETUDES ET DE RECHERCHES AEROSPATIALES(O.N.E.R.A.) 92320 Chatillon (Hauts de Seine) (FR)**

(72) Inventeurs:
• **LEMAITRE, François**
  **F-31650 Saint-Orens-de-Gameville (FR)**
• **POUSSIERE, Jean-Claude**
  **F-31520 Ramonville-Saint-Agne (FR)**

(74) Mandataire: **Warcoin, Jacques et al
Cabinet Régimbeau,
26, avenue Kléber
75116 Paris (FR)**

(56) Documents cités:
**US-A- 3 614 779        US-A- 4 400 700
US-A- 4 958 638        US-A- 5 448 501**

• **CHUANG H R ET AL:
"MICROPROCESSOR-CONTROLLED
AUTOMATIC CLUTTER-CANCELLATION
CIRCUITS FOR MICROWAVE SYSTEMS TO
SENSE PHYSIOLOGICAL MOVEMENTS
REMOTELY THROUGH THE RUBBLE" 13 Février
1990 , PROCEEDINGS OF THE
INSTRUMENTATION AND MEASUREMENT
TECHNOLOGY CONFERENCE, SAN JOSE, FEB.
13 - 15, 1990, NR. -, PAGE(S) 177 - 181 ,
INSTITUTE OF ELECTRICAL AND
ELECTRONICS ENGINEERS XP000163882 cité
dans la demande voir le document en entier**

## Description

La présente invention est relative aux procédés et aux systèmes électromagnétiques pour la détection et/ou la localisation d'individus.

Elle trouve en particulier avantageusement application à la recherche de victimes d'avalanches.

D'autres applications sont bien entendu envisageables pour l'invention.

Notamment, l'invention s'applique à toute détection et/ou localisation d'une personne cachée par un obstacle opaque et pourrait par exemple également être utilisée pour la recherche de personnes ensevelies sous des décombres.

De nombreux systèmes pour la détection et la localisation de victimes ensevelies sous un dépôt d'avalanche sont déjà connus.

Il a notamment déjà été proposé d'équiper les skieurs de balises chimiques permettant une détection olfactive par les chiens des sauveteurs. On pourra à cet égard se référer à la demande de brevet français FR 2 677 890.

Des systèmes mettant en oeuvre des émissions et réceptions électromagnétiques ont également déjà été proposés.

On peut notamment citer le système ARVA (Aide à la Recherche de Victimes d'Avalanches), qui est particulièrement développé en France. Dans ce système, les skieurs sont porteurs de balises de localisation qui émettent à la fréquence de 457 KHz.

On connaît également des systèmes, tel que le système commercialisé en France sous la dénomination RECO, dans lesquels les vêtements des skieurs sont équipés de dipôles d'émission destinés, sous éclairage électromagnétique, à émettre aux alentours de 1,8 GHz.

Ces différents systèmes de détection présentent l'inconvénient majeur de ne pouvoir fonctionner que si la personne que l'on recherche est équipée d'une balise ou d'un dispositif spécifique d'émission ; on dit alors que cette personne constitue une cible "coopérative".

Or, on constate malheureusement que les cas où les personnes ensevelies ne sont pas équipées, soit du fait de leur imprudence, soit en raison d'une mauvaise évaluation du risque d'avalanche, restent fréquents.

En outre, dans le cas d'une balise, celle-ci doit être activée par la personne qui la porte, avant qu'elle ne se trouve prise dans une avalanche.

Un but de l'invention est de pallier ces inconvénients.

On connaît déjà par la publication :

-    "Microprocessor-controlled automatic clutter-cancellation circuits for microwave systems to sense physiological movements remotely through the rubble", Chuang H.R. et al., 13 février 1990, San Jose, Feb. 13-15, 1990, p 177-181, IEEE, un dispositif permettant la détection de la présence d'une personne cachée par un obstacle par émission et réception de micro-ondes.

Un autre dispositif de ce type a également été proposé dans US 5 448 501.

Toutefois, l'une et l'autre de ces deux publications proposaient une émission et une réception de type monostatique, c'est-à-dire avec une même antenne.

Or, l'une des difficultés principales pour la détection des mouvements internes à un individu (respiration, battement de coeur) par émission et réception de micro-ondes est le très grand rapport énergétique entre l'écho fixe dû à l'environnement de l'individu et la modulation induite par ses propres mouvements. Typiquement, ce rapport est de l'ordre de 100 dB. Et une contribution à l'écho fixe, au moins égal et si ce n'est supérieur au signal que l'on cherche à détecter, provient de l'adaptation de l'antenne qui réinjecte une partie de la puissance émise dans la chaîne de réception (au mieux 1/10ème de la puissance émise).

De ce fait, avec des systèmes monostatiques, les signaux reçus ne peuvent être traités directement étant donné que l'écho fixe serait sinon largement saturant et il est nécessaire de mettre en oeuvre des techniques permettant l'élimination de l'écho fixe, par exemple par neutrodynage.

Il en résulte une électronique de réception particulièrement complexe.

L'invention propose quant à elle une détection et/ou localisation de la présence d'une personne par émission et réception d'onde électromagnétique, dont la mise en oeuvre peut être réalisée à partir d'une électronique particulièrement simplifiée.

Elle utilise à cet effet une architecture dans laquelle les antennes d'émission et de réception sont séparées, de sorte que leur couplage direct est faible et qu'il est possible de traiter directement des signaux reçus en filtrant l'écho fixe.

Ainsi, l'invention propose un procédé électromagnétique pour la détection et/ou la localisation d'un individu, constituant une cible non coopérative, dans lequel on émet au voisinage d'une zone de recherche un signal électromagnétique et on détecte au voisinage de ladite zone le signal rétrodiffusé par celle-ci, caractérisé en ce que l'émission et la réception sont réalisées au moyen d'au moins deux antennes distinctes,

en ce qu'on filtre le(ou les) signal(aux) ainsi obtenu(s) par un filtre passe-bas ou passe bande de façon à en extraire les composantes qui correspondent à un mouvement humain, et en ce qu'on traite le (ou les) signal(aux) filtré(s) ainsi obtenu(s) pour en déduire la présence d'un individu et/ou le localiser.

Un autre but de l'invention est de proposer un procédé de ce type qui permette la localisation d'un individu.

On dispose sur la zone de recherche au moins une sonde modulante qui génère un écho virtuel à une fréquence distincte de celle(s) d'un mouvement humain, on détecte au voisinage de la zone de recherche un signal correspondant à cet écho virtuel, on traite des signaux d'écho virtuel ainsi obtenus de la même façon que des signaux rétrodiffusés filtrés, et on compare des paramètres issus du traitement des signaux d'écho virtuel et des paramètres issus du traitement des signaux retrodiffusés filtrés pour localiser ledit individu.

Dans le cas où l'invention est appliquée à la recherche de victimes d'avalanches, la fréquence de la porteuse du signal électromagnétique émis est de préférence comprise entre 500 et 1000 MHz.

Cette bande de fréquences correspond en effet aux fréquences optimales pour la détection radar à travers un manteau neigeux : pour des fréquences plus élevées, l'atténuation des ondes par la neige est importante ; pour des fréquences inférieures, le signal utile devient trop faible pour assurer facilement la détection.

L'invention propose également un système pour la mise en oeuvre de ce procédé.

D'autres caractéristiques et avantages de l'invention ressortiront encore de la description qui suit. Cette description est purement illustrative et non limitative. Elle doit être lue en regard des dessins annexés sur lesquels :

- la figure 1 illustre un système de détection et localisation conforme à un mode de réalisation possible pour l'invention ;
- la figure 2 illustre schématiquement une détection mise en oeuvre conformément à l'invention ;
- la figure 3 est un graphe sur lequel on a porté en fonction du temps la puissance, en sortie de l'antenne de détection mesurée pendant l'expérience illustrée à la figure 2.

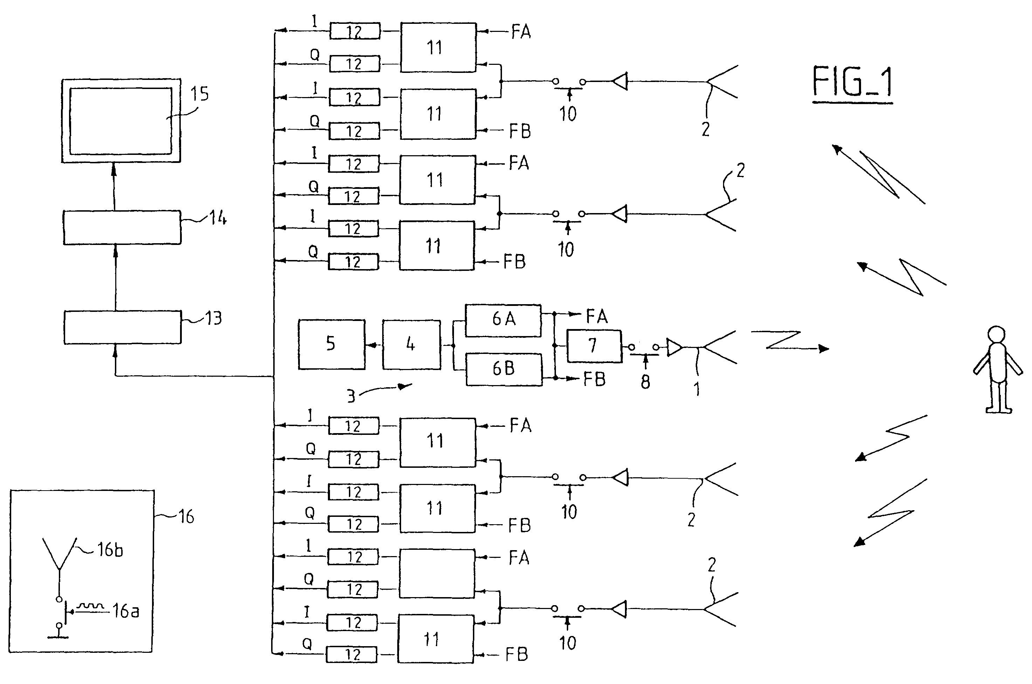

Le système de détection et localisation illustré sur la figure 1 est un radar multistatique bifréquence à impulsions.

Ce système comporte une antenne d'émission 1, ainsi qu'une pluralité d'antennes de réception 2. Il comporte également des moyens référencés par 3 dans leur ensemble pour la génération d'un signal destiné à être rayonné par l'antenne 1, ainsi que pour la démodulation et le traitement des signaux reçus par les antennes 2.

Les antennes de réception 2 sont par exemple réparties en ligne de façon à former une ou plusieurs paires interférométriques devant le manteau neigeux sur lequel les recherches sont effectuées. Les antennes 2 sont dans cet exemple au nombre de quatre, deux antennes successives étant séparées d'une distance comprise entre 0,5 et 1 mètre.

Bien entendu, d'autres dispositions sont possibles pour les antennes 1 et 2. En particulier, la disposition des antennes 1 et 2 sera avantageusement adaptée à la typologie du dépôt neigeux sur lequel les recherches sont effectuées.

Par ailleurs, selon une caractéristique avantageuse de l'invention, les antennes d'émission et de réception 1 et 2 sont plantées directement dans la neige.

On élimine ainsi leurs mouvements propres.

En outre, on évite que les ondes électromagnétiques aient à traverser des interfaces air/neige, qui constituent des dioptres susceptibles d'occasionner des pertes de puissance importantes.

Les antennes 1 et 2 sont à cet effet des circuits imprimés à substrat en résine d'époxy, qui présentent une certaine robustesse et dont la structure plane est facile à planter dans la neige.

Par ailleurs, ces antennes d'émission et de réception 1 et 2 sont avantageusement des antennes à fentes antipodales, par exemple des antennes à fentes évasées de type VIVALDI.

On sait en effet qu'avec une telle structure d'antenne, le champ électromagnétique est généré à l'intérieur des fentes. Par conséquent, l'émission et la réception par des antennes de ce type ne sont pas perturbées par la présence de gouttes d'eau à la surface de l'antenne.

Les moyens 3 comportent un oscillateur de référence 4, qui pilote d'une part un générateur de synchronisation 5 et d'autre part des synthétiseurs de fréquences 6A et 6B.

Les synthétiseurs 6A et 6B génèrent des tensions sinusoïdales, dont les fréquences FA et FB correspondent aux deux fréquences d'émission et de réception du système.

Ces fréquences FA et FB sont par exemple de 750 et 780 MHz, l'oscillateur 4 oscillant à la fréquence de 60 MHz.

Pour l'émission par l'antenne 1, les moyens 3 comportent un sommateur 7 sur lequel les signaux en sortie des synthétiseurs 6A, 6B sont envoyés pour être mélangés, ainsi qu'une porte de modulation 8 sur laquelle les signaux en sortie du sommateur 7 sont envoyés avant d'être rayonnés par l'antenne 1.

La porte de modulation 8 est commandée par le générateur de synchronisation 5. Elle module les signaux mélangés en un train d'impulsions répétitives, avec une durée d'impulsion de 33 ns et un facteur de forme 1/16.

Les différentes voies de réception en sortie des antennes 2 comportent chacune une porte 10, ainsi que des sommateurs 11 pour la démodulation en phase et en quadrature des signaux de fréquence FA et FB reçus par les antennes 2.

Les portes 10 sont commandées par le générateur de synchronisation de façon à ouvrir des fenêtres de réception de 33 ns de largeur et décalées par pas de 16 ns par rapport à la porte de modulation 8.

En sortie des mélangeurs 11, les signaux de phase et de quadrature sont filtrés par des filtres passe bande 12 permettant d'extraire dans les signaux reçus les composantes non statiques de ceux-ci qui correspondent aux mouvements que l'on cherche à détecter (mouvements de respiration, mouvements de dégagements, etc.).

La bande passante de ces filtres 12 est à cet effet avantageusement comprise entre 0,03 Hz et 3 Hz.

Les signaux de phase et de quadrature I et Q ainsi filtrés sont ensuite numérisés par un convertisseur analogique/numérique 13, puis transmis à une unité de traitement 14 qui traite ces signaux pour en déduire une information de détection et/ou de localisation d'une personne ensevelie sous un manteau neigeux.

Le système comporte en outre une unité de visualisation 15 sur laquelle ces informations sont affichées à destination des opérateurs.

Bien entendu, de façon à ce que leur propre présence ne soit pas détectée, ceux-ci se déportent à quelques dizaines de mètres de la zone de recherche et des antennes d'émission et de réception 1 et 2.

On va maintenant décrire un exemple de traitement simple qui peut être réalisé par l'unité de traitement 14 sur les huit signaux complexes qu'elle reçoit.

Pour détecter la présence d'un individu vivant caché sous la neige, c'est à dire les composantes non statiques des signaux rétrodiffusés sur les antennes 2, l'unité de traitement 14 calcule pour chaque antenne 2, chaque fréquence FA, FB et chaque fenêtre de détection, la valeur moyenne du produit conjugué $Sa_k(t).Sa_k(t)^*$ sur un intervalle de temps d'une dizaine de secondes, où $Sa_k(t)$ est le signal temporel en sortie des filtres 12 de la voie de réception correspondant à l'antenne k.

Ce produit conjugué est comparé à un seuil. Il y a détection de la présence d'un individu par une antenne 2 lorsque la valeur moyenne du produit conjugué est supérieure à ce seuil.

Pour limiter les fausses alarmes, on confirme cette détection en calculant la variance des différents produits conjugués correspondant aux huit voies de réception et on compare cette variance à un seuil. On dispose ainsi d'un critère de détection global qui tient compte de la réception sur les différentes voies.

Cette détection peut en outre être confirmée en calculant les coefficients d'intercorrélation entre les signaux des différentes voies et différentes fréquences et en analysant ces différents coefficients pour estimer la vraisemblance de l'événement. Par exemple, on vérifie que des signaux correspondant à deux antennes voisines sont effectivement corrélés.

Les coefficients d'intercorrélation forment la matrice de covariance estimée dont on calculera le ou les vecteurs propres. Ces derniers permettent de combiner les 8 voies de manière cohérente pour former une ou des voies qui ont la propriété d'offrir une sensibilité maximale aux sources de mouvement qui ont délivré le signal de détection.

On notera que cette procédure de confirmation n'est possible que parce que les mouvements que l'on détecte, tels que les mouvements de respiration de la victime, sont par nature ininterrompus et localisés en une position stable.

Pour localiser la personne qui correspond à la composante non statique détectée, on peut calculer pour chaque fenêtre de réception, chaque couple d'antennes (i,j), et pour chaque fréquence FA, FB, le déphasage

$$T_{ij} = \arg\ (Sa_i(t).Sa_j^*(t)),$$

qui correspond à l'orientation géométrique de la personne par rapport au couple d'antennes i, j.

On peut également calculer pour chaque fenêtre de réception et chaque antenne k, l'argument

$$D_k = \arg\ (<S_{kFA}(t).S_{kFB}^*(t)>)$$

<> signifiant valeur moyenne de,
qui correspond au déphasage entre les signaux en sortie des voies de fréquences FA et FB pour l'antenne k et qui porte une information sur la distance totale antenne 1 --personne-- antenne k.

Les paramètres $T_{i,j}$ et $D_K$ ainsi obtenus seraient redondants dans l'hypothèse d'un milieu de propagation homogène.

Toutefois, un des problèmes que pose plus particulièrement un milieu tel qu'un manteau neigeux tient en ce qu'il est hétérogène.

Un manteau neigeux est en effet constitué d'une pluralité de dépôts successifs qui présentent des densités et des propriétés diélectriques différentes et qui sont brassés et modifiés dans un dépôt d'avalanche. Le milieu de propagation comporte en outre des cavités plus ou moins grandes, ainsi que des inclusions de rochers, des troncs d'arbres, de la terre, etc... tout comme peut également comporter un milieu de propagation résultant d'un tremblement de terre.

Pour résoudre cette difficulté, on déplace sur la zone de recherche une sonde modulante 16 qui génère un écho virtuel à une fréquence suffisamment élevée pour ne pas être confondue avec la fréquence d'un mouvement naturel.

Le système comporte en sortie des mélangeurs 11 des moyens - non représentés sur la figure 1 pour ne pas la surcharger - pour transmettre à l'unité de traitement 14 les signaux démodulés correspondant à cet écho virtuel.

L'unité de traitement 14 calcule les paramètres $T_{i,j}$ et/ou $D_K$ de cet écho virtuel et l'opérateur déplace sa sonde 16 de façon que ces paramètres convergent vers ceux qui correspondent à la rétrodiffusion par la personne que l'on cherche à localiser. Dans la position finale, la sonde coïncide avec la victime.

La sonde modulante 16 est par exemple constituée d'un dipôle fermé alternativement sur un circuit ouvert et un court-circuit à une fréquence de 40 Hz.

Par ailleurs, il est possible, au lieu de déplacer une sonde sur la zone de recherche, de quadriller celle-ci avec une pluralité de sondes modulantes 16 émettant chacune sur une fréquence différente.

Bien entendu, d'autres traitements que ceux qui viennent d'être décrits peuvent également être envisagés.

En particulier, il peut être prévu des traitements de filtrage permettant d'améliorer le contraste entre le signal utile et les signaux parasites en utilisant toutes les caractéristiques spectrales de ces signaux.

L'invention a été ici décrite dans le cas d'un radar multistatique bifréquence à impulsions, mais s'applique bien entendu de la même façon à toute détection radar et en particulier à une détection par radar à ondes continues et/ou par radar monofréquence ou multifréquence.

Pour une présentation générale des techniques radar, on pourra avantageusement se référer à l'ouvrage : "Principes de traitement des signaux radar et sonar" - F. Le Chevalier - MASSON - 1989, dont l'enseignement est ici inclus par référence.

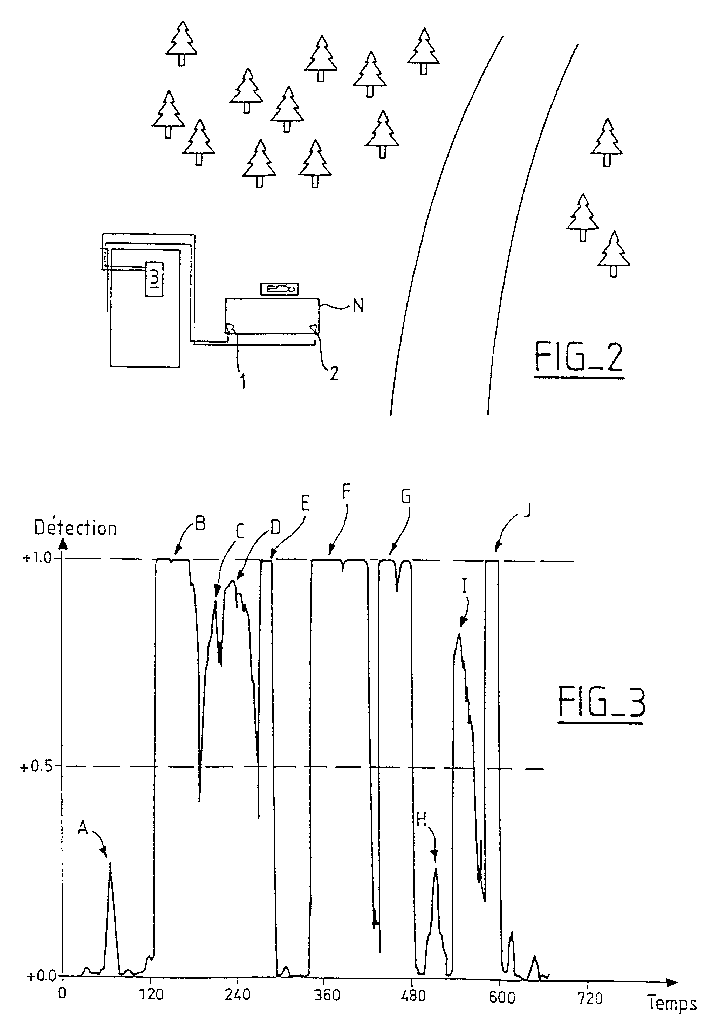

Un exemple de mise en oeuvre de l'invention est illustrée sur les figures 2 et 3.

Dans cette mise en oeuvre, la détection a été réalisée, ainsi qu'on l'a représenté sur la figure 2, derrière un mur de neige N.

Ce mur de neige N était d'une hauteur approximative de 2m, d'une largeur de 5,20 m et d'une épaisseur de 3,60 m.

Il était constitué de neige fraîche et de neige ancienne plus ou moins souillée, malaxées et tassées en partie par des engins.

La détection était réalisée par une antenne de réception 2 disposée par rapport au mur N du même côté que l'antenne d'émission 1.

Un certain nombre d'événements sont intervenus derrière le mur N et ont été détectés par l'antenne 2.

On a porté sur le graphe temporel de la figure 3 la puissance relevée en sortie des voies de l'antenne 2, qui correspond aux échos non statiques reçus par ladite antenne 2.

Les pics de puissance qui apparaissent sur ce graphe coïncident bien avec différents événements qui sont intervenus derrière le mur N :

- entre 0 et 120 s, il n'y a personne derrière le mur N, mais on observe le passage d'un skieur au loin (pic A) ;
- entre 130 et 180 s, une personne s'est placée derrière le mur, en position debout (pic B) ;
- entre 180 et 220 s, cette personne s'est tenue le plus immobile possible, mais ses mouvements de respiration étaient détectés (pic C) ;
- entre 220 et 270 s, cette personne a bougé une main (pic D);
- entre 270 et 290 s, elle s'est éloignée (pic E);

- entre 340 et 420 s, une barquette a été installé au pied du mur (pic F);
- entre 420 et 480 s, une personne s'est allongée sur cette barquette (pic G);
- entre 480 et 520 s, cette personne a bougé une main (pic H);
- entre 520 et 580 s, cette personne a effectué six respirations fortes (pic I);
- entre 580 et 600 s, cette personne s'est levée (pic J).

On voit sur cet exemple que l'invention permet de clairement discriminer les échos qui proviennent d'une personne en mouvement, des échos dus à son environnement statique.

Il est donc possible de détecter la respiration ou les mouvements légers d'une personne prise sous une avalanche.

On notera par ailleurs qu'avec une fréquence de fonctionnement comprise entre 500 et 1000 MHz, l'invention permet de détecter une victime sous 10 mètres de neige, alors que les recherches traditionnelles à l'aide de perches sont limitées à une profondeur de 6 mètres.

**Revendications**

1. Procédé électromagnétique pour la détection d'un individu constituant une cible non coopérative, dans lequel on émet (1) au voisinage d'une zone de recherche (N) un signal électromagnétique, on détecte (2) au voisinage de ladite zone (N) le signal rétrodiffusé par celle-ci, on filtre le(ou les) signal(aux) ainsi obtenu(s) par un filtre passe bande (12) de façon à en extraire les composantes qui correspondent à un mouvement humain, et on traite (14) le (ou les) signal(aux) filtré(s) ainsi obtenu(s) pour en déduire la présence d'un individu, caractérisé en ce que pour localiser un individu l'émission et la réception sont réalisées au moyen d'au moins deux antennes distinctes, en ce qu'on dispose sur la zone de recherche au moins une sonde modulante (16) qui génère un écho virtuel à une fréquence distincte de celle(s) d'un mouvenent humain, en ce qu'on détecte au voisinage de la zone de recherche un signal correspondant à cet écho virtuel, en ce qu'on traite des signaux d'écho virtuel ainsi obtenus de la même façon que des signaux rétrodiffusés filtrés, et en ce qu'on compare des paramètres issus du traitement des signaux d'écho virtuel et des paramètres issus du traitement des signaux rétrodiffusés filtrés pour localiser ledit individu.

2. Procédé selon la revendication 1, caractérisé en ce qu'on utilise pour la réception une pluralité d'antennes de réception distinctes réparties au voisinage de la zone de recherche.

3. Procédé selon l'une des revendications 1 ou 2, caractérisé en ce que la bande passante du filtre est comprise entre 0,03Hz et 3 Hz.

4. Procédé selon l'une des revendications précédentes, pour la détection et/ou la localisation d'une personne ensevelie sous un dépôt d'avalanche, caractérisé en ce que la fréquence de la porteuse du signal électromagnétique émis est comprise entre 500 et 1000 MHz.

5. Procédé selon l'une des revendications précédentes, pour la détection et/ou la localisation d'une personne ensevelie sous un dépôt d'avalanche, caractérisé en ce que les antennes d'émission et de réception sont plantées directement dans la neige.

6. Système électromagnétique pour la détection d'un individu constituant une cible non coopérative, comportant des moyens (1) pour l'émission d'un signal électromagnétique au voisinage d'une zone de recherche, des moyens de réception (2) pour la détection au voisinage de la zone de recherche du signal rétrodiffusé par celle-ci, ainsi qu'un filtre passe bande (12) qui permet de filtrer le(ou les) signal (aux) ainsi obtenu(s) pour en extraire les composantes qui correspondent à un mouvement humain, et des moyens (14) pour le traitement du (ou des) signal(aux) filtré(s) ainsi obtenu(s) pour en déduire la présence d'un individu, caractérisé en ce que ledit système permet la localisation d'un individu, les moyens d'émission et de réception comportant au moins deux antennes distinctes, le système comportant en outre au moins une sonde modulante (16) qui génère un écho virtuel à une fréquence distincte de celle(s) d'un mouvement humain, de source que les paramètres issus du traitement des signaux d'écho virtuel et les paramètres issus des signaux rétrodiffusés sont comparés pour localiser ledit individu.

7. Système selon la revendication 6, caractérisé en ce qu'il présente une pluralité d'antennes de réception distinctes réparties au voisinage de la zone de recherche.

8. Système selon l'une des revendications 6 ou 7, caractérisé en ce que la sonde modulante (16) est un dipôle fermé alternativement en circuit ouvert et court-circuit à une fréquence supérieure à celles filtrées par le filtre passe bande (12).

9. Système selon l'une des revendications 6 à 8, caractérisé en ce que les antennes d'émission et réception (1, 2) sont des antennes à fentes évasées de type VIVALDI.

10. Système selon la revendication 9, caractérisé en ce que les antennes d'émission et réception (1,2) sont à fentes antipodales dont le circuit est imprimé sur un substrat en résine époxy.

## Patentansprüche

1. Elektromagnetisches Verfahren für das Aufspüren einer Person, welche ein nicht kooperatives Zielobjekt bildet, bei dem (1) in der Nachbarschaft eines Suchbereiches (N) ein elektromagnetisches Signal ausgesendet wird, und (2) in der Nachbarschaft dieses Suchbereiches (N) das von hier zurückgesendete Signal festgestellt wird, und das (oder die) so erhaltenen Signale mit Hilfe eines Bandfilters (12) so gefiltert werden, daß die Komponenten herausgelöst werden, welche der Bewegung eines Menschen entsprechen, und daß das (oder die) so gefilterten Signale aufbereitet werden, um dadurch auf die Anwesenheit eines Lebewesens zu schließen,
**dadurch gekennzeichnet, daß**
für die Ortung eines Lebewesens die Aussendung und der Empfang mit Hilfe von mindestens zwei getrennten Antennen erfolgen, und dadurch, daß in dem Suchbereich mindestens eine Tiefenlehre (16) vorgesehen ist, welche ein virtuelles Echo mit einer Frequenz abgibt, die sich von der Frequenz einer menschlichen Bewegung unterscheidet, und daß in der Nachbarschaft des Suchbereiches ein Signal gemessen wird, welches diesem virtuellen Echo entspricht, und daß die so erzielten Werte des virtuellen Echos in der gleichen Weise verarbeitet werden, wie die gefilterten zurückgesendeten Signale, und daß man Parameter, die aus der Aufbereitung der Signale des virtuellen Echos entstanden sind, mit Parametern vergleicht, welche durch die Verarbeitung der gefilterten zurückgesendeten Parameter hervorgegangen sind, um ein solches Lebewesen zu orten.

2. Verfahren nach Anspruch 1,
**dadurch gekennzeichnet daß**
für den Empfang eine Vielzahl von einzelnen Empfangsantennen verwendet wird, die in der Nachbarschaft des Suchbereiches verteilt angeordnet sind.

3. Verfahren nach einem der Ansprüche 1 oder 2,
**dadurch gekennzeichnet, daß**
der Frequenzbereich des Filters zwischen 0,03 Hz und 3 Hz liegt.

4. Verfahren nach einem der vorstehenden Ansprüche für das Aufspüren und/oder Orten einer Person, die von einer Lawine verschüttet worden ist,
**dadurch gekennzeichnet, daß**
die von der Grundwelle des elektromagnetischen Signals ausgesendete Frequenz zwischen 500 und 1000 Hz liegt.

5. Verfahren nach einem der vorausgegangenen Ansprüche für das Aufspüren und/oder das Orten einer von einer Lawine verschütteten Person,
**dadurch gekennzeichnet, daß**
die Sender- und Empfängerantennen direkt in den Schnee eingesetzt werden.

6. Elektromagnetisches System für das Aufspüren eines Lebewesens, welches ein nicht kooperatives Zielobjekt bildet, enthaltend Mittel (1) für das Aussenden eines elektromagnetischen Signals in der Nachbarschaft eines Suchbereiches, sowie mit Empfangsmitteln (2) für das Feststellen in der Nachbarschaft des Suchbereiches des von diesem zurückgesendeten Signals, und einen Bandfilter (12), mit dessen Hilfe das (oder die) so erhaltenen Signale gefiltert werden, um daraus die Komponenten herauszulösen, die einer menschlichen Bewegung entsprechen, und mit Mitteln (14) für die Aufbereitung des oder der so erhaltenen gefilterten Signale, um daraus auf die Anwesenheit eines Lebewesens zu schließen,
**dadurch gekennzeichnet, daß**
dieses System die Ortung eines Lebewesens ermöglicht, wobei die Sende- und Empfangsmittel mindestens zwei getrennte Antennen aufweisen, und das System außerdem mindestens eine Tiefenlehre (16) aufweist, die ein virtuelles Echo mit einer Frequenz erzeugt, die sich von der Frequenz der Bewegung eines Lebewesens unterscheidet, so daß die Parameter, die sich aus der Aufbereitung der Signale des virtuellen Echos, und die Parameter, die sich aus den zurückgesendeten Signalen ergeben, verglichen werden können, um dieses Lebewesen zu orten.

7. System nach Anspruch 6,
**dadurch gekennzeichnet, daß**
es eine Vielzahl von getrennten Empfangsantennen aufweist, die in der Nachbarschaft des Suchbereiches verteilt aufgestellt werden.

8. System nach einem der Ansprüche 6 oder 7,
**dadurch gekennzeichnet, daß**
die Tiefenlehre (16) ein Dipol ist, der abwechselnd im offenen Kreis und im Kurzschlußkreis mit einer Frequenz geschlossen wird, die höher ist, als die von dem Bandfilter (12) gefilterten Frequenzen.

9. System nach einem der Ansprüche 6 bis 8,
**dadurch gekennzeichnet, daß**
die Sender- und Empfängerantennen (1, 2) Schlitzanbennen vom Typ VIVALDI sind.

10. System nach Anspruch 9,
**dadurch gekennzeichnet, daß**
die Sender- und Empfängerantennen (1, 2) Antipodenschlitze aufweisen, deren Schaltkreis auf ein Substrat aus Epoxydharz aufgedruckt ist.

## Claims

1. An electromagnetic method for detecting a person constituting a non-cooperative target, in which an electromagnetic signal is transmitted (1) in the vicinity of a search zone (N), the signal returned by the person is detected (2) in the vicinity of said zone (N), each signal obtained in this way is filtered by a bandpass filter (12) so as to extract therefrom components corresponding to movement of a human, and each signal obtained in this way is processed (14) to deduce therefrom the presence of a person, the method being characterized in that to locate a person, said transmission and reception are implemented by means of at least two distinct antennas, in that at least one modulating probe (16) which generates a virtual echo at a frequency different from that of human movement is disposed on the search zone, a signal corresponding to said virtual echo is detected in the vicinity of the search zone, the virtual echo signals obtained in this way are processed in the same manner as the filtered return signals, and the parameters resulting from the processing of the virtual echo signals and the parameters resulting from processing of the filtered return signals are compared to locate said person.

2. A method according to claim 1, characterized in that a plurality of distinct receive antennas are used for reception, said antennas being distributed in the vicinity of the search zone.

3. A method according to claim 1 or 2, characterized in that the passband of the filter lies in the range 0.03 Hz to 3 Hz.

4. A method according to any preceding claim for detecting and/or locating a person buried under avalanche debris, the method being characterized in that the frequency of the transmitted electromagnetic signal carrier lies in the range 500 MHz to 1000 MHz.

5. A method according to any preceding claim, for detecting and/or locating a person buried under avalanche debris, the method being characterized in that the transmit and receive antennas are stuck directly into the snow.

6. An electromagnetic system for detecting a person constituting a non-cooperative target, the system comprising transmitter means (1) for transmitting an electromagnetic signal in the vicinity of a search zone, receiver means (2) for detecting in the vicinity of the search zone, the signal returned thereby, together with a bandpass filter (12) for filtering the signal(s) obtained in this way and for extracting therefrom components corresponding to human movement, and processor means (14) for processing the filtered signal(s) obtained in this way for deducing therefrom the presence of a person, the system being characterized in that said system enables a person to be located, the transmitter and receiver means comprising at least two distinct antennas, the system further including at least one modulating probe (16) which generates a virtual echo at a frequency different from that of human movement, such that the parameters resulting from the processing of the virtual echo signals and the parameters resulting from the return signals are compared to locate said person.

7. A system according to claim 6, characterized in that it has a plurality of distinct receive antennas distributed in the vicinity of the search zone.

8. A system according to claim 6 or 7, characterized in that the modulating probe (16) is a dipole that is closed alternately by an open circuit and by a short circuit at a frequency greater than that of the frequencies filtered by the bandpass filter (12).

9. A system according to any one of claims 6 to 8, characterized in that the transmit and receive antennas (1, 2) are flared slot antennas of the VIVALDI type.

10. A system according to claim 9, characterized in that the transmit and receive antennas (1, 2) are antipodal slots having a circuit printed on an epoxy resin substrate.

FIG_1

FIG_2

FIG_3